# EUROPEAN PATENT APPLICATION

(11) **EP 1 646 107 A2**
(43) Date of publication of application: **12.04.2006**
(21) Application number: 04747916.7
(22) Date of filing: 16.07.2004
(51) Int. Cl.: H01Q 1/24, H01Q 7/06, H04B 1/38, H04B 1/18

(54) **MOUNTING TYPE RECEIVER, MOUNTING TYPE TRANSMITTER, MOUNTING TYPE TRANSMITTER-RECEIVER, ANTENNA, RECEIVER, TRANSMITTER, AND TRANSMITTER-RECEIVER**

(30) Priority: 16.07.2003 JP 2003275447
(71) Applicant: CITIZEN WATCH CO. LTD., Tokyo 188-8511 (JP)
(72) Inventor: SATO, Nobuhiro, c/o CITIZEN WATCH CO., LTD., Nishitokyo-shi, Tokyo 1888511 (JP); KATO, Yuichi, c/o CITIZEN WATCH CO., LTD., Nishitokyo-shi, Tokyo 1888511 (JP)
(74) Representative: Browne, Robin Forsythe
(86) International application number: PCT/JP2004/010553
(87) International publication number: WO 2005/008830

(57) **Abstract**

An antenna (100) includes a core (101) formed with ferrite and an antenna copper plate (102) arranged on periphery of the core (101) so that the antenna copper plate wraps nearly one around the core (101). A length L1 of the core (101)=a length L2 of the antenna copper plate (102), and a width W1 of the core (101)=a width W2 of the antenna copper plate (102). A height H1 of the core (101) and a height H2 of the antenna copper plate (102) are set to be equal or one to be larger (or smaller) than the other according to a necessary receiving characteristic.

## Description

### TECHNICAL FIELD

The present invention relates to an antenna capable of transmitting/receiving radio waves, a transmitter, a receiver, and a transmitter/receiver that are provided with the antenna, and more particularly to an antenna that can be downsized while maintaining a high sensitivity in a frequency modulation (FM) band, and a wearable receiver, a wearable transmitter, and a wearable transmitter/receiver that are provided with the antenna and can be downsized.

### BACKGROUND ART

Conventionally, an external antenna that is connected to an antenna terminal of a receiver or an extendable rod antenna is used for the FM band of approximately 100 MHz (for example, 76 MHz to 108 MHz). A technology for downsizing such antennas includes a ferrite antenna in which a ferrite stick is wrapped with a metal plate (for example, refer to Official Gazette for Kokai Utility Model Application No. S62-32613).

Furthermore, as a simplified antenna, a cord-shaped antenna that is arranged along a signal cord is used (for example, refer to Japanese Patent Application Laid-Open Publication No. H11-284422). The cord-shaped antenna is to be arranged along a headphone cord for a portable radio, a headphone player, and the like.

However, because a conventional downsized antenna for the FM band is made in a simple structure, it is impossible to obtain sensitivity practically sufficient for the FM band of relatively low frequencies. In recent years, a receiver itself has been downsized, and such a downsized receiver requires an antenna that is sufficiently downsized while having sensitivity high enough for practical use.

In view of the above problems, it is an object of the present invention to provide a wearable receiver, a wearable transmitter, a wearable transmitter/receiver, an antenna, a receiver, a transmitter, and a transmitter/receiver that can be downsized while having high sensitivity.

### DISCLOSURE OF INVENTION

To solve the above problems and to achieve the object, the wearable receiver according to the present invention is characterized by the following. A wearable receiver includes a receiving unit that includes a demodulating unit that receives a reception radio wave in an FM multiplex telecasting and that demodulates the reception radio wave to output; a display unit that displays text information output by the demodulating unit; an antenna for receiving and transmitting a frequency in the frequency modulation band; and a base plate that accommodates the receiving unit, the display unit, and the antenna, and that is structured to be worn on an arm. The antenna includes a magnetic member, and an antenna copper plate arranged on a periphery of the magnetic member so that the antenna copper plate wraps nearly one around the magnetic member.

According to the present invention, the antenna, the receiving unit, and the display unit are accommodated in the base plate, and the wearable receiver is downsized to be compact enough to be worn on an arm. Accordingly, it is possible to reduce a size of an entire device and to receive text information with high sensitivity from the FM multiplex telecasting.

An antenna according to the present invention includes a magnetic member, and an antenna copper plate arranged on a periphery of the magnetic member so that the antenna copper plate wraps nearly one around the magnetic member.

According to the present invention, it is possible to improve the sensitivity, without changing a size of an entire body, from sensitivity of an antenna formed with the antenna copper plate alone, by providing the magnetic member inside the antenna copper plate.

A receiver according to the present invention receives a frequency in a frequency modulation band, and includes, in an antenna, a magnetic member that is in a substantially parallelepiped shape having a predetermined length, width, and height; an antenna copper plate that is arranged on a periphery of the magnetic member that continues in a direction of the length and the width, so that the antenna copper plate wraps nearly one around the magnetic member, and that has a height of a predetermined ratio to the height of the magnetic member; and a receiving unit that is connected to antenna terminals of the antenna.

According to the present invention, it is possible to reduce a size of an entire device and to receive a frequency in the FM band with high sensitivity by providing a compact in which the height of the magnetic member is set at a predetermined ratio to the height of the antenna copper plate.

Furthermore, a transmitter, a wearable transmitter, a transmitter/receiver, and a wearable transmitter/receiver according to the present invention can transmit and receive with high sensitivity including a downsized antenna.

### BRIEF DESCRIPTION OF DRAWINGS

Fig. 1 is a perspective view of an antenna according to the present invention;
Fig. 2 is an exploded perspective view of the antenna according to the present invention;
Fig. 3 is a block diagram of an entire structure of a receiver;
Fig. 4 is a graph of variable states of sensitivity when a dimension of a core is varied while a dimension of an antenna copper plate of the antenna is fixed;
Fig. 5 is a graph of variable states of the sensitivity when the dimension of the antenna copper plate is varied while the dimension of the core of the antenna is fixed;
Fig. 6 is a graph of a characteristic between frequency and Q of a magnetic material;
Fig. 7 is a plot of a frequency characteristic of magnetic permeability of the core appropriate for a frequency band applied in the present invention;
Fig. 8 is a table of examples of a material usable for the core according to the present invention;
Fig. 9 is a schematic for illustrating an environment for measuring sensitivity of the antenna according to the present invention;
Fig. 10 is a perspective view of a wristwatch provided with the antenna and the receiver according to the present invention viewed from a front side;
Fig. 11 a perspective view of the wristwatch provided with the antenna and the receiver according to the present invention viewed from a rear side;
Fig. 12 is a front view of a pendant watch provided with the antenna and the receiver according to the present invention;
Fig. 13 is a front view of the pendant watch in an operational state; and
Fig. 14 is a front view of a modification of the antenna.

### BEST MODE(S) FOR CARRYING OUT THE INVENTION

Embodiments of the present invention are explained in detail below with reference to the accompanying drawings. An antenna according to the present invention receives frequencies in the FM band. Furthermore, the receiver explained in this embodiment receives radio waves of FM multiplex telecasting and demodulates the radio waves received to display text information. The FM multiplex telecasting adopts a mode in which text information data is multiplexed to be transmitted on the same channel (CH) as audio broadcasting.

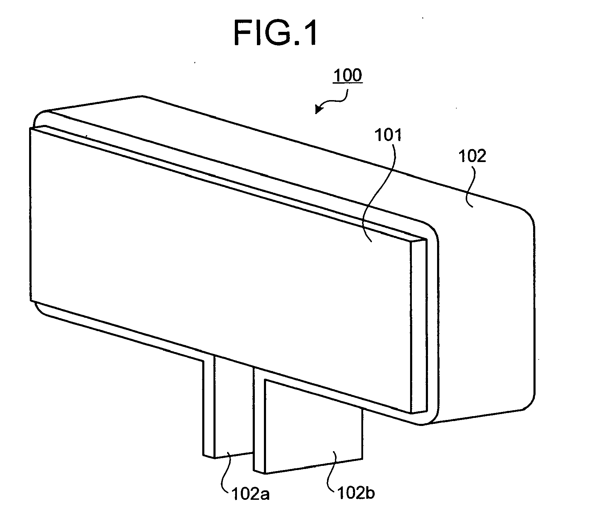

Fig. 1 is a perspective view of the antenna according to the present invention. An antenna 100 includes a core 101 that is formed with a magnetic material, such as ferrite, and an antenna copper plate 102 arranged on a periphery of the core 101 so that the antenna copper plate 102 wraps almost one around on the periphery of the core 101. Both ends of the antenna 100 are antenna terminals 102a and 102b and are connected to a receiving unit of the receiver.

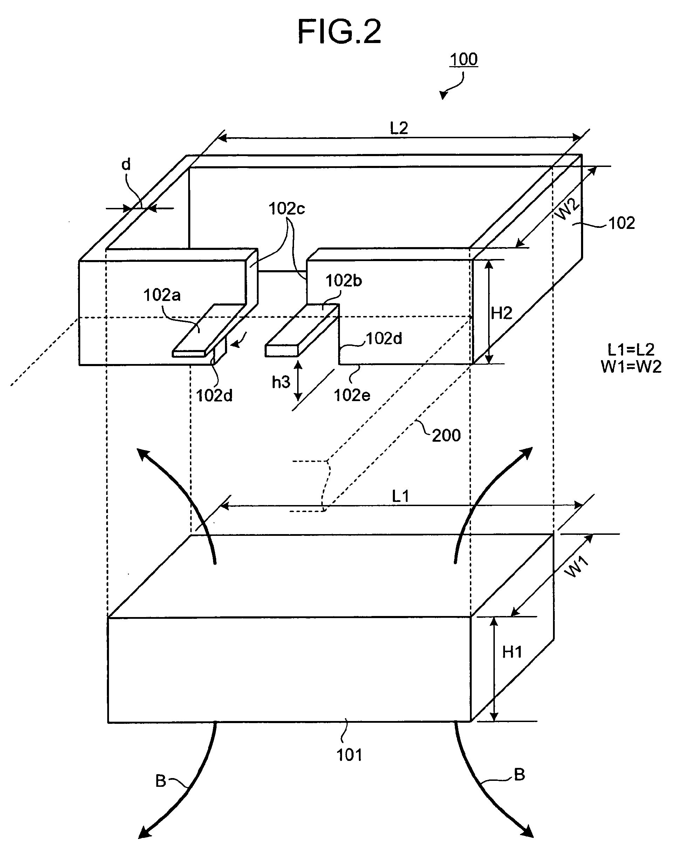

Fig. 2 is an exploded perspective view of the antenna according to the present invention. Although structure shown in Fig. 2 is partially different from that shown in Fig. 1, a basic structure is the same. As shown, the core 101 has a length L1, a width W1 and a height H1 in a rectangular parallelepiped shape.

The antenna copper plate 102 is formed by bending a metal plate and has a length L2, a width W2, a height H2, and a plate thickness d. As shown, the antenna has a structure in which the periphery of the core 101 is wrapped around with the antenna copper plate 102, therefore, the length L1 of the core 101 is equal to the length L2 of the antenna copper plate 102, and the width W1 of the core 101 is equal to the width W2 of the antenna copper plate 102. As will be described later, the height H1 of the core 101 and the height H2 of the antenna 102 are made equally or so that one is longer (or shorter) than the other depending on necessary receiving characteristics.

Furthermore, as shown in Fig. 2, the antenna terminals 102a and 102b are formed by arranging, in the antenna copper plate 102, cuts 102d parallel to an ends 102c of the antenna copper plate 102 and then bending portions by 90 degrees. Thus, a space having a predetermined height h3 is formed between a bottom surface 102e of the antenna copper plate 102 and the antenna terminals 102a and 102b. In the space, a circuit substrate 200, described later, of the receiving unit in the receiver can be arranged, thereby facilitating connection between the antenna terminals 102a and 102b and the receiving unit. Furthermore, it is possible to arrange the receiving unit without forming a gap between the antenna terminals 102a and 102b and the receiving unit, thereby enabling downsizing in a direction of the width W shown.

In this manner, the circuit substrate 200 and the antenna 100 are arranged parallel to each other in a state in which the antenna 100 is directly connected to the circuit substrate 200 of the receiving unit. Thus, when the circuit substrate 200 and the antenna 100 are arranged closed to each other, a passing direction in which magnetic fluxes B pass with respect to the circuit substrate 200 should be arranged so that the magnetic fluxes B do pass through the circuit substrate 200. Therefore, as shown, the passing direction of the magnetic fluxes B in the antenna 100 is set so as to be the same direction as a face of the circuit substrate 200. When such setting is not carried out, for example, when the passing direction of the magnetic fluxes B in the antenna 100 is orthogonal to the face of the circuit substrate 200, one of the magnetic fluxes B directs to the circuit substrate 200, deteriorating receiving sensitivity.

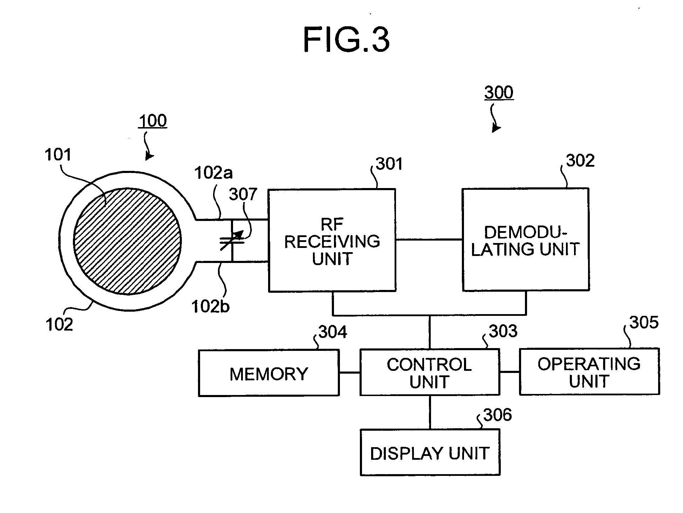

Next, a receiver provided with the antenna 100 having the structure as described above will be explained. Fig. 3 is a block diagram of an entire structure of a receiver according to the present invention.

A receiver 300, to which the antenna terminals 102a and 102b are connected, includes an radio-frequency (RF) receiving unit 301 that receives reception signals in the FM band and outputs baseband signals, a demodulating unit 302 that demodulates and outputs audio information or text information included in the FM band based on the baseband signals, a control unit 303 that controls the RF receiving unit 301 and the demodulating unit 302, a memory 304 that stores program for control processing of the control unit 303 and demodulated information, an operating unit 305 for operating the receiver 300, and a display unit 306 that displays receiving channel (CH), receiving states, received information, and the like.

Although not shown, the RF receiving unit 301 includes a low noise amplifier (LNA), a mixer, an intermediate amplifier, a filter, and the like, and outputs baseband signals. The demodulating unit 302 outputs audio and text information of a selected receiving CH. The control unit 303 controls the memory 304 to temporarily store text information contained in received data of the FM multiplex telecasting, and controls the display unit 306 to display the text information.

Between the antenna terminals 102a and 102b of the antenna 100, a trimmer capacitor 307 is connected in parallel. When the receiver 300 (the RF receiving unit 301) and the antenna 100 are connected to each other, the trimmer capacitor 307 makes capacity variable so that a maximum antenna gain (gain) can be obtained.

Next, a setting of dimensions of the core 101 and the antenna 102 to optimize gain adjustment for the core 101 and the antenna copper plate 102 of the antenna 100 described above will be explained.

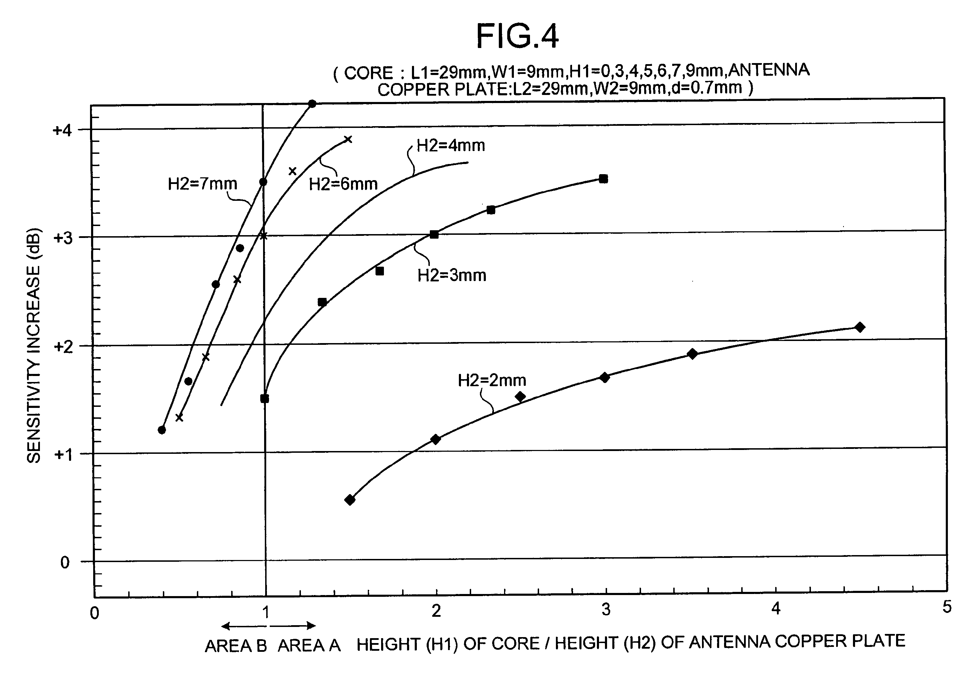

Fig. 4 is a graph a graph of variable states of sensitivity when the dimensions of the dimensions of the core is varied while the dimensions of the antenna copper plate of the antenna is fixed. The length L1 of the core 101=the length L2 of the antenna copper plate 102=29 mm, and the width W1 of the core 101=the width W2 of the antenna copper plate 102=9 mm. Furthermore, the thickness d of the antenna copper plate 102=0.7 mm.

A horizontal axis represents a ratio of the height H1 of the core 101 to the height H2 of the antenna copper plate 102 (height H1 of core 101/height H2 of antenna copper plate 102), and a vertical axis represents sensitivity increase (dB) when sensitivity of an antenna formed only with the antenna copper plate 102 without providing the core 101 (the height H1 of the core 101=0) is set as a reference (0). For example, "1" on the horizontal axis indicates that the height H1 of the core 101 and the height H2 of the antenna copper plate 102 are the same.

An area A exceeding "1" on the horizontal axis represents a case in which the height H1 of the core 101 is larger than the height H2 of the antenna copper plate 102. For example, when the ratio is "2" on the horizontal axis, the height H1 of the core 101 is twice as large as the height H2 of the antenna copper plate 102. On the other hand, an area B that is smaller than "1" on the horizontal axis represents a case in which the height H1 of the core 101 is smaller than the height H2 of the antenna copper plate 102.

Then, the variable states of the sensitivity when the height H2 of the antenna copper plate 102 is set to 2 mm, 3 mm, 4 mm, 6 mm, and 7 mm and the height H1 of the core 101 is set to 0 mm (without core), 3 mm, 4 mm, 5 mm, 6 mm, 7 mm, and 9 mm are shown. As shown, the larger the height H2 of the antenna copper plate 102 becomes (concurrently, the larger the height H1 of the core 101 becomes), the more the sensitivity increases. Furthermore, if the height H2 of the antenna copper plate 102 is fixed, the larger the height H1 of the core 101 inside the antenna copper plate 102 becomes, the more the sensitivity tends to increase.

In the area A, a range having the largest sensitivity increase is a range in which the ratio of the height H1 of the core 101 to the height H2 of the antenna copper plate 102 is "1 to 2" on the horizontal axis. This range is a range in which the height H1 of the core 101 is up to twice as large as the height H2 of the antenna copper plate 102, and is a range suitable for downsizing the antenna 100.

Regarding the area B, the variation in the sensitivity increase is large only when the height H2 of the antenna copper plate 102 is 6 mm and 7 mm or larger. However, with such setting of dimension, the height of the antenna 100 becomes large, and therefore, it is not suitable for downsizing.

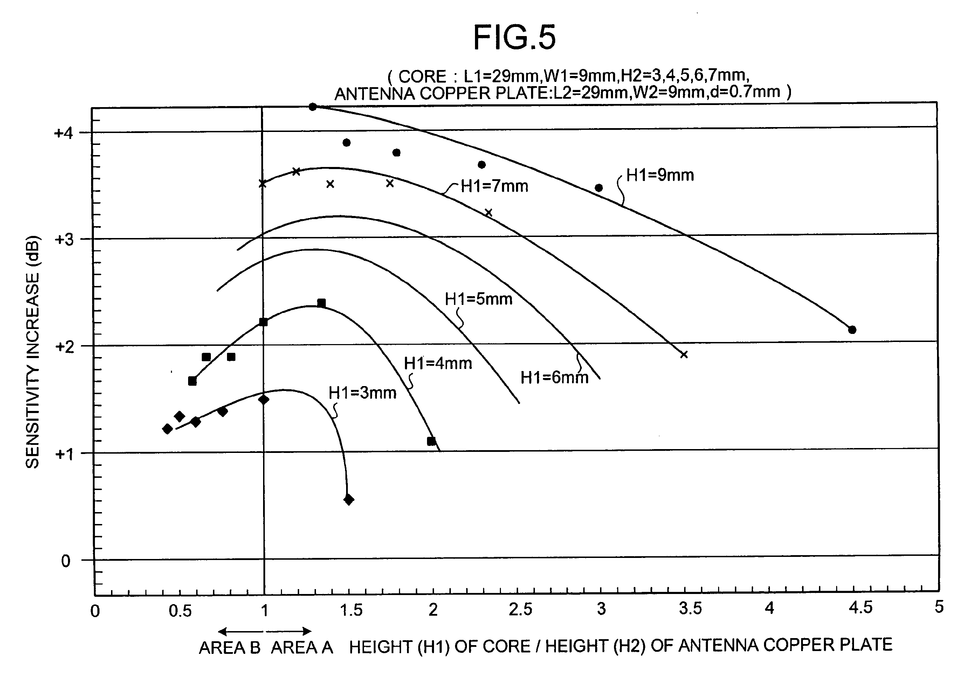

Next, Fig. 5 is a graph of variable states of the sensitivity when the dimension of the antenna copper plate is varied while the dimension of the core of the antenna is fixed. The length L1 of the core 101=the length L2 of the antenna copper plate 102=29 mm, and the width W1 of the core 101=the width W2 of the antenna copper plate 102=9 mm. Furthermore, the thickness d of the antenna copper plate 102=0.7 mm.

The horizontal axis represents the ratio of the height H1 of the core 101 to the height H2 of the antenna copper plate 102 (height H1 of core 101/height H2 of antenna copper plate 102), and the vertical axis represents the sensitivity increase (dB) when the sensitivity of an antenna formed only with the antenna copper plate 102 without providing the core 101 (the height H1 of the core 101=0) is set as the reference (0). For example, "1" on the horizontal axis indicates that the height H1 of the core 101 and the height H2 of the antenna copper plate 102 are the same.

An area A exceeding "1" on the horizontal axis represents a case in which the height H1 of the core 101 is larger than the height H2 of the antenna copper plate 102. For example, when the ratio is "2" on the horizontal axis, the height H1 of the core 101 is twice as large as the height H2 of the antenna copper plate 102. On the other hand, an area B equal to or smaller than "1" on the horizontal axis represents a case in which the height H1 of the core 101 is smaller than the height H2 of the antenna copper plate 102.

Then, variable states of the sensitivity when the height H1 of the core 101 is set to 0 mm (without core), 3 mm, 4 mm, 5 mm, 6 mm, 7 mm, and 9 mm and the height H2 of the antenna copper plate 102 to 3 mm, 4 mm, 5 mm, 6 mm, and 7 mm are shown. As shown, the larger the height H1 of the core 101 becomes (concurrently, the larger the height H2 of the antenna copper plate 102 becomes), the more the sensitivity increases. However, when the ratio to the height H2 of the antenna copper plate 102 with which this core 101 is wrapped is considered while the height H1 of the core 101 is fixed, the range having the largest sensitivity increase in the area A is a range in which the ratio of the height H1 of the core 101 to the height H2 of the antenna copper plate 102 is "1 to 2" on the horizontal axis.
This range is a range in which the height H1 of the core 101 is up to twice as large as the height H2 of the antenna copper plate 102, and is a range suitable for downsizing the antenna 100. Particularly, when the ratio of the height H1 of the core 101 to the height H2 of the antenna copper plate 102 is 1.2 or 1.3, the sensitivity increase reach its peak. Furthermore, regarding the area B, any value shown in the area B is lower than any value at the peak shown in the area A.

As results shown in Fig. 4 and Fig. 5, a range most suitable for downsizing is a range in which the ratio of the height H1 of the core 101 to the height H2 of the antenna copper plate 102 is "1 to 2" in the area A. Particularly, when the ratio of the height H1 of the core 101 to the height H2 of the antenna copper plate 102 is about 1.3, the sensitivity becomes the highest. For example, if the height H1 of the core 101 is 4 mm, the height H2 of the antenna copper plate 102 of 4x1.3=5.2 mm produces to the highest sensitivity.

Note that, with settings within the area B in which the height H1 of the core 101 is smaller than the height H2 of the antenna copper plate 102, the core 101 can be accommodated inside the antenna copper plate 102. Accordingly, it is also conceivable that such setting within the area B can be adopted to save weight by making the height H1 of the core 101 small.

Moreover, the plate thickness d of the antenna copper plate 102 can be set to 0.1 mm, 0.3 mm, 0.5 mm, 1.0 mm and the like besides 0.7 mm described above. It is said that the plate thickness d does not have a significant influence on the conductivity according to the fundamental property of a high frequency (skin effect). However, when the plate thickness d is 0.7 mm, the sensitivity increase of about 2 dB can be obtained compared to when the plate thickness d was 0.1 mm or 0.3 mm.

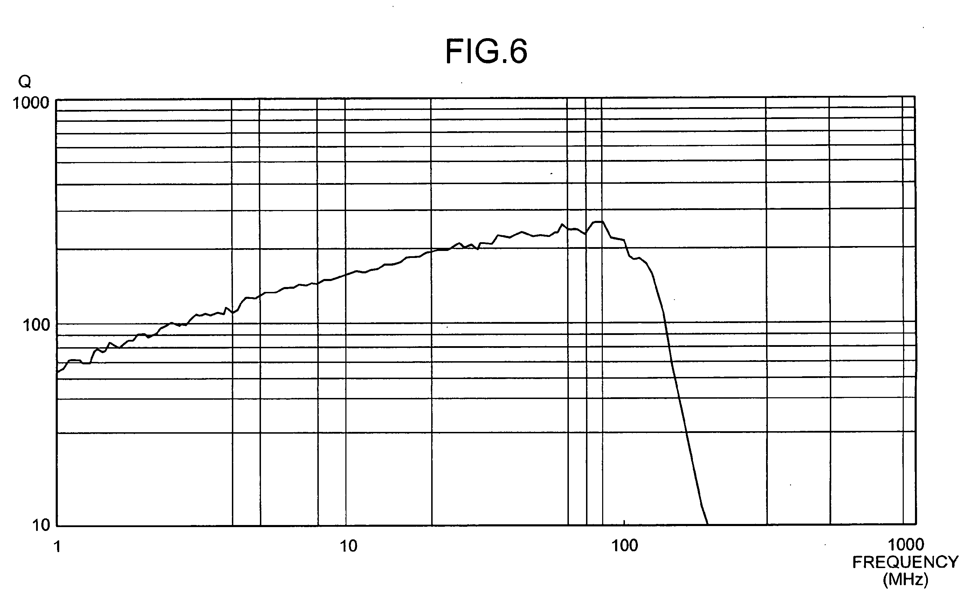

Next, characteristics of the magnetic material used for the core 101 will be explained. A soft magnetic material (ferrite) used for the core 101 is preferable to have a high Q value in an FM band to be used. Fig. 6 is a graph of a characteristic between a frequency and Q of a magnetic material. As shown, it is necessary to use a material that has a high Q value, for example, a Q value of 100 or higher, near a frequency of 100 MHz to be used.

Furthermore, a magnetic material used for the core 101 is required to have a magnetic permeability suitable for the frequency to be used. Generally, a magnetic flux density B of a magnetic material used for the core 101 is described as B=µH (µ: magnetic permeability, H: alternating magnetic field), where µ=µ1-j µ2 (µ1=µ', µ2=µ"). Values of the magnetic permeability µ1 and the magnetic permeability µ2 vary depending on the frequency.

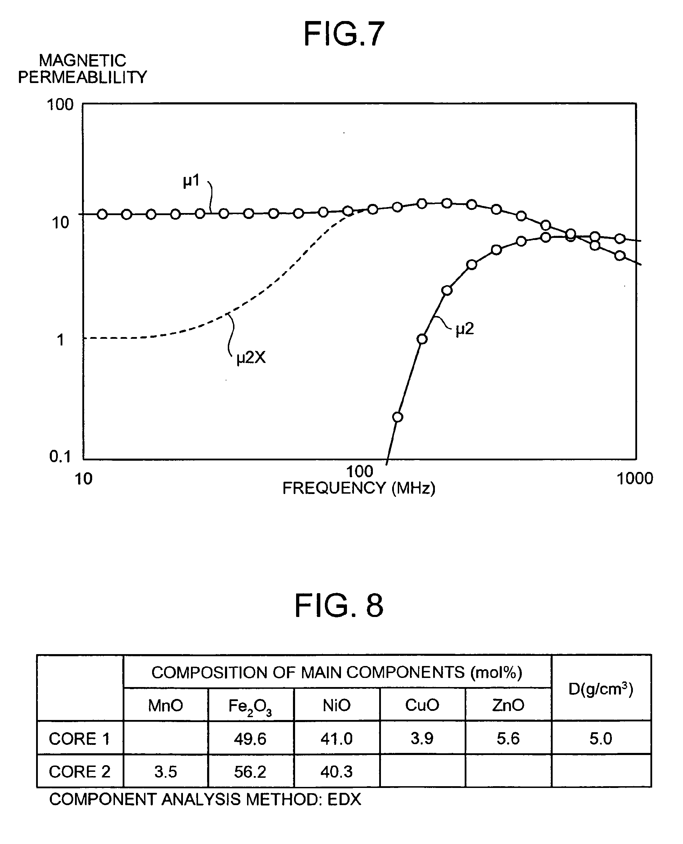

Fig. 7 is a plot of a frequency characteristic of magnetic permeability of the core appropriate for a frequency band applied in the present invention. It is preferable to use such a material that the magnetic permeability µ1 is approximately flat and the magnetic permeability µ2 is as small as possible at a frequency (near 100 MHz) to be used. Therefore, a material having magnetic permeability µ2X, which is already high near the frequency used as shown with a dotted line in Fig. 7, is not preferable. It is preferable to use a material of which a value of the magnetic permeability µ2 is small at the frequency (near 100 MHz) used as shown by a characteristic line for the magnetic permeability µ2. Specifically, it is preferable to use a material of which the magnetic permeability µ1 is 10 or lower and the magnetic permeability µ2 is 0.03 or lower at the frequency (near 100 MHz) used.

As explained, it is preferable that such a material is used that the Q value is high, the magnetic permeability µ1 is approximately flat, and the magnetic permeability µ2 is as small as possible near the frequency (100 MHz) used in the FM band as the magnetic material applied in the present invention.

Fig. 8 is a table of examples of a material usable for the core according to the present invention. Among material examples, a core 1 includes iron oxide (Fe2O3) and nickel oxide (NiO) as its main components and further includes copper oxide (CuO) and zinc oxide (ZnO). A core 2 includes iron oxide (Fe2O3) and nickel oxide (NiO) as its main components, and further includes manganese oxide (MnO). Note that the core 1 and the core 2 are in a stick shape, and lengths, widths, and heights are 27x7x3 mm for the core 1 and 21×5×3 mm for the core 2, respectively.

Both of the core 1 and the core 2 have a composition including the main components of iron oxide (Fe2O3) and nickel oxide (NiO) and copper oxide (CuO), zinc oxide (ZnO), and manganese oxide (MnO)in combination. By using the core 101 having such composition, the Q value becomes high near the used frequency (100 MHz) in the FM band as shown in Fig. 6, and the magnetic permeability µ1 becomes approximately flat and the magnetic permeability µ2 becomes as small as possible shown in Fig. 7, thereby obtaining excellent characteristics of the core 101 of the antenna 100.

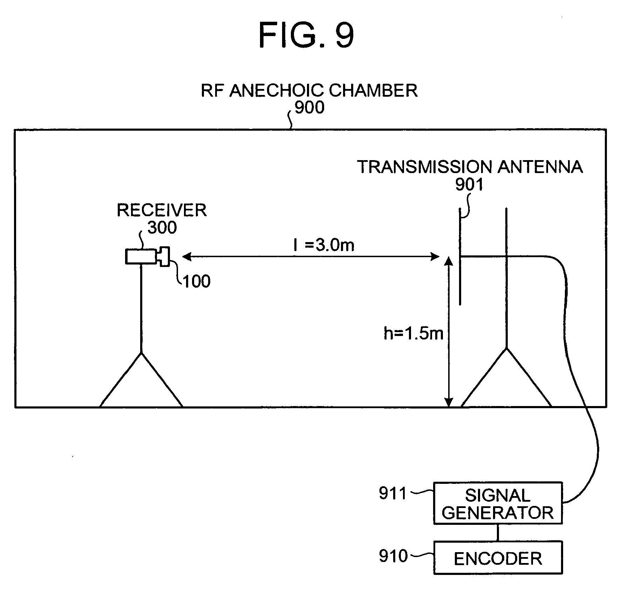

Next, a measuring environment in which a sensitivity characteristic (refer to Fig. 4 and Fig. 5) of the antenna shown in Fig. 1 is measured will be explained. Fig. 9 is a schematic for illustrating an environment for measuring sensitivity of the antenna according to the present invention. Measurement of the sensitivity of the antenna 100 is carried out inside an RF anechoic chamber 900 that is used in a 3m method, using a dipole antenna of which a height above ground h=1.5 m as a transmission antenna 901 at a frequency of 97.3 MHz. The receiver (small receiver) 300, which is a receiving side, provided with the antenna 100 according to the present invention is also placed 1.5 m above ground in a similar way, and a distance 1 between the transmission antenna 901 and the antenna 100 is 3.0 m.

An encoder 910 and a signal generator 911 generate a transmission packet at the frequency of 97.3 MHz described above to transmit via the transmission antenna 901. The receiver 300 is driven by a battery and includes each component shown in Fig. 3. For the measurement of the sensitivity characteristic, the demodulating unit 302 shown in Fig. 3 outputs number of packet errors in a received packet, the control unit 303 shown therein counts the number of the packet errors. Moreover, the control unit 303 controls to display the number of received packets and the number of the packet errors in a predetermined time of receiving period on the display unit 306.

Based on a ratio between the number of received packets and the number of packet errors, the receiving sensitivity shown in Fig. 4 and Fig. 5 is obtained. An electric field intensity at which the number of packet errors becomes 10% relative to the number of received packets is measured as the receiving sensitivity. Note that, as described previously, the trimmer capacitor 307 is adjusted in advance so as to obtain a maximum antenna gain at the time of the sensitivity measurement.

The antenna 100 structured as described above can be used as a compact antenna with high sensitivity by optimally setting the dimensions of the core 101 and the antenna copper plate 102 based on the sensitivity characteristic shown in Fig. 4 and Fig. 5. To receive reception radio waves at the FM frequencies in good conditions, a predetermined receiving sensitivity is necessary. In the standards of a certain communication service, an appropriate electric field intensity is 47 (dBµV/m) or higher. The dimensions of the core 101 and the antenna copper plate 102 may be set so as to satisfy this electric field intensity.

Specifically, in the example shown in Fig. 5, if the length L1 of the core 101=the length L2 of the antenna copper plate 102=29 mm, the width W1 of the core 101=the width W2 of the antenna copper plate 102=9 mm, and the thickness d of the antenna copper plate 102=0.7 mm, the height H1 of the core 101=5 mm, and the height H2 of the antenna copper plate 102=(H1/H2=1 to 1.5)=3.33 mm to 5 mm, and particularly the optimal value of the height H2 of the antenna copper plate 102=4.16 mm (H1/H2=1.2) or H1/H2=1.3 (3.85 mm), to practically satisfy the standard value of this communication service.

Next, a specific structural example of the receiver 300 using this antenna 100 will be explained. Since the antenna according to the present invention is sufficiently downsized and has excellent sensitivity, the antenna 100 can be incorporated into various instruments. Particularly, the antenna 100 can be incorporated into portable instruments such as a laptop personal computer (PC), a personal digital assistance (PDA), a compact radio, and a portable compact disk (CD)/digital versatile disc (DVD) player, compact instruments such as a wearable watch, an in-vehicle radio, an in-vehicle CD/DVD player, an in-vehicle navigation device, and the like.

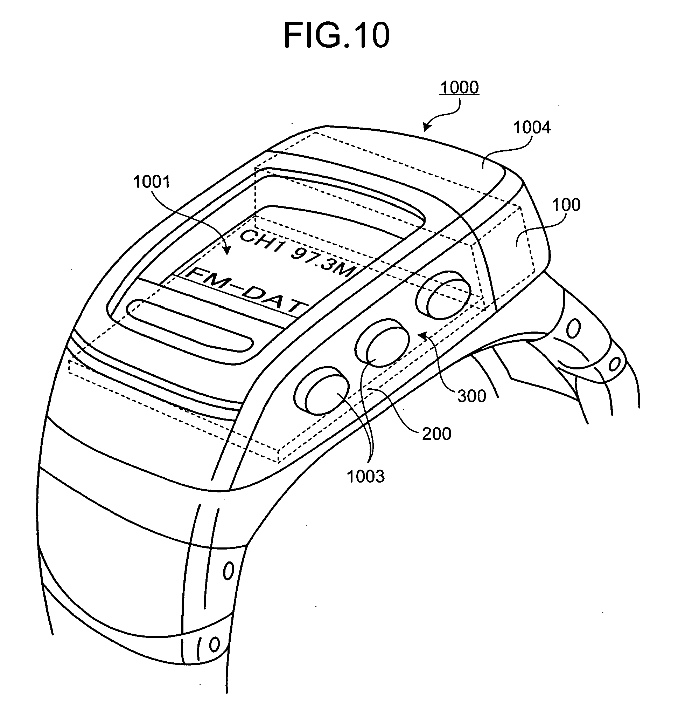

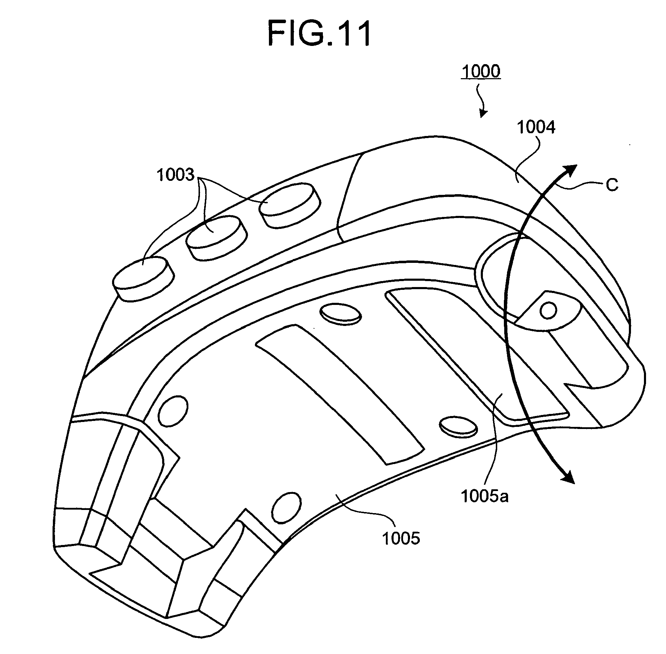

Fig. 10 and Fig. 11 are schematic of a wearable wristwatch provided with the antenna and the receiver according to the present invention. Fig. 10 is a perspective view from a front side, and Fig. 11 is a perspective view from a rear side. A wristwatch 1000 displays time, date, and the like on a display screen 1001. Furthermore, the antenna 100 and the circuit substrate 200 having a watch function and a circuit structure of the receiver 300 are built in.

The antenna 100 and the circuit substrate 200 can be connected to each other without forming a space therebetween as described previously referring to Fig. 2, thereby making a size of a whole watch compact. Buttons 1003 arranged on a side serve as the operating unit 305 shown in Fig. 3 and the display screen 1001 serves as the display unit 306. An example in which characters are displayed when the FM multiplex telecasting is received is shown.

As shown, a cover 1004 formed with resin is provided on an upper portion of the wristwatch 1000, and the antenna 100 is accommodated inside this cover 1004. The antenna 100 receives radio waves at a frequency in the FM band through the cover 1004. As shown in Fig. 11, on the rear side of the wristwatch 1000, a metal base plate 1005 is arranged entirely. An opening hole 1005a is formed on the base plate 1005 at a portion corresponding to a portion at which the antenna 100 is arranged and is closed with a closing member formed with resin. Thus, reception radio waves can pass through between the front side shown in Fig. 10 and the rear side shown in Fig. 11, opposite to the front side, (in a direction shown by a virtual line C), thereby obtaining a predetermined receiving sensitivity.

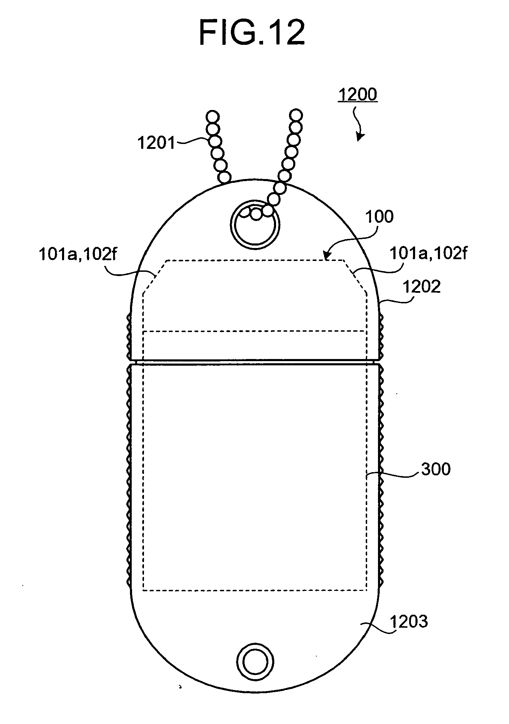

Moreover, Fig. 12 is a front view of a pendant watch provided with the antenna and the receiver according to the present invention. A pendant watch 1200 is sufficiently downsized for wearable application in which it the pendant watch 1200 can be carried on a chain 1201 hanging around a neck, and so forth. This pendant watch 1200 includes a top case 1202 formed with resin that accommodates the antenna 100, and a bottom case 1203 formed with metal. For the top case 1202, metal can be used for a portion or a whole, for example, for a rear side of the top case 1202, as long as the sensitivity is not degraded for radio waves at a frequency in the FM band that the antenna 100 receives.

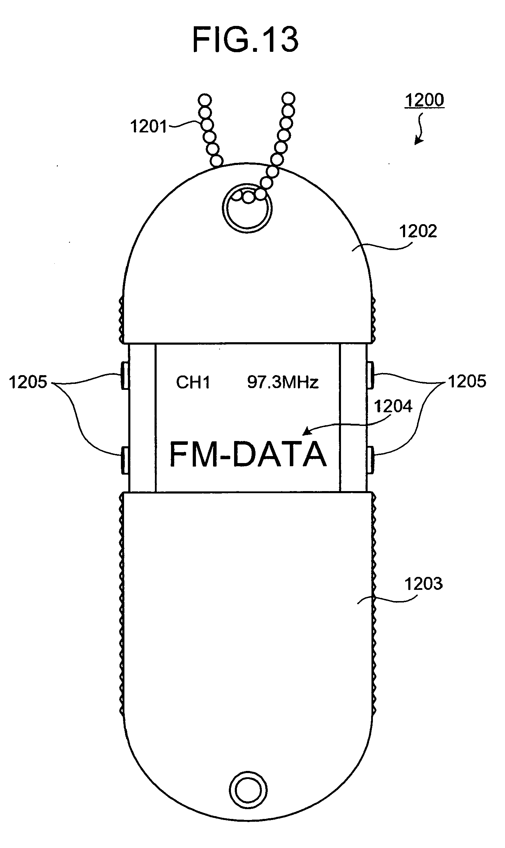

Fig. 13 is a front view of the pendant watch in an operational state. As shown, the bottom case 1203 is slidably arranged with respect to the top case 1202. By sliding the bottom case 1203 down, a display screen 1204 and operation buttons 1205 can be exposed. In such pendant watch 1200, the antenna 100 and the receiver 300 shown in Fig. 10 can be similarly built-in and it is possible to watch contents of the FM multiplex telecasting. It is also possible to watch and listen to the FM multiplex telecasting by providing a headphone jack or a speaker, not shown, on the rear side or the like.

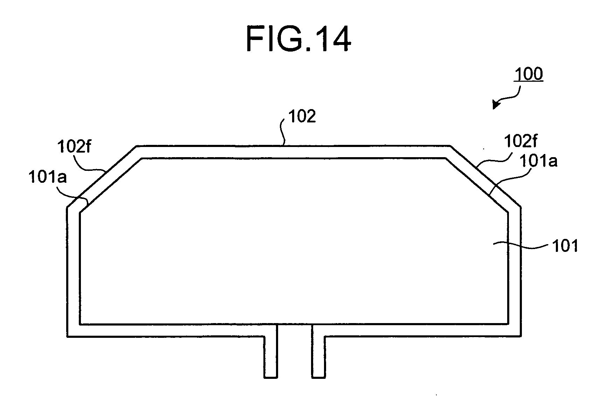

Next, an example of modification on a shape of the antenna 100 described above will be explained. Fig. 14 is a front view of a modification of the antenna 100. In the example shown, inclined portions 101a are formed by forming a shape of the core 101 in such a manner that a part (two outer corners among the four corners) of the core 101 is cut off. Along the shape including the inclined portions 101a, the antenna copper plate 102 with which the core 101 is wrapped around the periphery has also inclined portions 102f. Thus, it is possible to downsize the antenna 100 by cutting off the corners to eliminate unnecessary protrusions.

For example, in the pendant watch 1200 shown in Fig. 12, an outer shape of the top case 1202 is formed in an arc shape. To adapt for such shape of the top case 1202 in which the antenna 100 is accommodated, the antenna 100 that has the inclined portions 101a shown in Fig. 14 can be provided. In Fig. 12, the antenna 100 shown in Fig. 14 is illustrated. In this way, the antenna 100 may be formed in a shape fitting to a shape of a housing such as a base plate of a wristwatch and a top case of a pendant. For example, the shape of the antenna 100 is not limited to a parallelepiped or a stick, and may be a shape in which a portion is cut or rounded, a polygon such as a trapezoid and a triangle, or a shape having an arc of a predetermined diameter corresponding to a shape of a housing.

In explanation above, an example in which a downsized antenna is used in a receiver and a wearable receiver has been explained. This antenna can also transmit radio waves, therefore, the antenna can be applied also to a transmitter, a transmitter/receiver, a wearable transmitter, and a wearable transmitter/receiver. These transmitters can be structured with a modulating unit (not shown) that modulates radio waves in the FM band. Such transmitters can transmit data stored inside the transmitters, contents of the FM multiplex telecasting received by the demodulating unit, and audio data input through a microphone (not shown) and the like.

As explained above, according to the present invention, an antenna can be downsized while maintaining a high receiving sensitivity for radio waves in the FM band. According to the present invention, by providing such downsized antenna, it is possible to reduce a size of a device to be compact while keeping high receiving sensitivity with ease.

### INDUSTRIAL APPLICABILITY

As described above, the present invention is useful for an antenna, a receiver, a transmitter, and a transmitter/receiver that transmit and receive frequencies in an FM band, and particularly suitable for a receiver, a transmitter, and a transmitter/receiver in portable or wearable devices because the antenna can be downsized.

## Claims

1. A wearable receiver comprising:
a receiving unit that includes a demodulating unit that receives a reception radio wave in a frequency modulation multiplex telecasting and that demodulates the reception radio wave to output;
a display unit that displays text information output by the demodulating unit;
an antenna for receiving and transmitting a frequency in the frequency modulation band; and
a base plate that accommodates the receiving unit, the display unit, and the antenna, and that is structured to be worn on an arm, wherein
the antenna includes
a magnetic member, and
an antenna copper plate arranged on a periphery of the magnetic member so that the antenna copper plate wraps nearly one around the magnetic member.

2. The wearable receiver according to claim 1, wherein the antenna is arranged on the base plate at a position excluding positions at which the receiving unit and the display unit are arranged.

3. The wearable receiver according to claim 1, wherein an opening hole for letting the reception radio wave pass through with respect to the antenna is arranged by forming an opening at the position at which the antenna is arranged on the base plate.

4. The wearable receiver according to claim 1, wherein the magnetic member has an inclined portion that is formed corresponding to a shape of the base plate by cutting off a portion of the periphery on which the antenna copper plate is wrapped.

5. The wearable receiver according to claim 1, wherein the magnetic member has an arc-shaped portion having a predetermined diameter, corresponding to a shape of the base plate, on the periphery on which the antenna copper plate is wrapped.

6. A wearable transmitter comprising:
a transmitting unit that includes a modulating unit that modulates a transmissive radio wave in a frequency modulation band to output;
an antenna for transmitting a frequency in the frequency modulation band; and
a base plate that accommodates the transmitting unit, and the antenna, and that is structured to be worn on an arm, wherein
the antenna includes
a magnetic member, and
an antenna copper plate arranged on a periphery of the magnetic member so that the antenna copper plate wraps nearly one around the magnetic member.

7. A wearable transmitter/receiver comprising:
a receiving unit that includes a demodulating unit that receives a reception radio wave in a frequency modulation multiplex telecasting and that demodulates the reception radio wave to output;
a transmitting unit that includes a modulating unit that modulates a transmissive radio wave in the frequency modulation band to output;
a display unit that displays text information output by the demodulating unit;
an antenna for receiving and transmitting a frequency in the frequency modulation band; and
a base plate that accommodates the receiving unit, the transmitting unit, the display unit, and the antenna, and that is structured to be worn on an arm, wherein
the antenna includes
a magnetic member, and
an antenna copper plate arranged on a periphery of the magnetic member so that the antenna copper plate wraps nearly one around the magnetic member.

8. An antenna comprising:
a magnetic member, and
an antenna copper plate that is arranged on a periphery of the magnetic member so that the antenna copper plate wraps nearly one around the magnetic member.

9. An antenna for receiving a frequency in a frequency modulation band, the antenna comprising:
a magnetic member that is in a substantially parallelepiped shape having a predetermined length, width, and height; and
an antenna copper plate that is arranged on a periphery of the magnetic member, the periphery that continues in a direction of the length and the width, so that the antenna copper plate wraps nearly one around the magnetic member, and that has a height of a predetermined ratio to the height of the magnetic member.

10. The antenna according to claim 9, wherein the magnetic member has an inclined portion formed by cutting off a portion of the periphery on which the antenna copper plate is wrapped.

11. The antenna according to claim 9, wherein the magnetic member has an arc-shaped portion having a predetermined diameter on the periphery on which the antenna copper plate is wrapped.

12. The antenna according to claim 9, wherein the height of the antenna copper plate is equal to the height of the magnetic member.

13. The antenna according to claim 9, wherein the height of the antenna copper plate is smaller than the height of the magnetic member.

14. The antenna according to claim 9, wherein the height of the antenna copper plate is larger than the height of the magnetic member.

15. The antenna according to claim 9, wherein the ratio of the height of the magnetic member to the height of the antenna copper plate is from 1 to 2.

16. The antenna according to claim 15, wherein the ratio of the height of the magnetic member to the height of the antenna copper plate is from 1.2 to 1.3.

17. The antenna according to claim 9, wherein the magnetic material is formed with a material of which a magnetic permeability µ1 is 20 or lower and a magnetic permeability µ2 is 0.03 or lower at a frequency in the frequency modulation band.

18. The antenna according to claim 9, wherein main components of the magnetic material are iron oxide (Fe2O3) and nickel oxide (NiO).

19. A receiver comprising:
a magnetic member;
an antenna copper plate that is arranged on a periphery of the magnetic member so that the antenna copper plate wraps nearly one around the magnetic member; and
a receiving unit that is connected to antenna terminals of the antenna.

20. A receiver that receives a frequency in a frequency modulation band, the receiver comprising:
a magnetic member that is in a substantially parallelepiped shape having a predetermined length, width, and height;
an antenna copper plate that is arranged on a periphery of the magnetic member, the periphery that continues in a direction of the length and the width, so that the antenna copper plate wraps nearly one around the magnetic member, and that has a height of a predetermined ratio to the height of the magnetic member; and
a receiving unit that is connected to antenna terminals of the antenna.

21. The receiver according to claim 20, wherein the height of the antenna copper plate is equal to the height of the magnetic member.

22. The antenna according to claim 20, wherein the height of the antenna copper plate is smaller than the height of the magnetic member.

23. The receiver according to claim 20, wherein
the antenna is directly connected to a circuit substrate of the receiving unit, and is arranged so that magnetic fluxes passing through the antenna do not pass through the circuit substrate.

24. The receiver according to 20, wherein
the receiving unit includes
a demodulating unit that receives a reception radio wave of a frequency modulation multiplex telecasting and that demodulates the reception radio wave to output, and
a display unit that displays text information output by the demodulating unit.

25. A transmitter comprising:
a transmitting unit that includes a modulating unit that modulates a transmissive radio wave in a frequency modulation band to output; and
an antenna for transmitting a frequency in the frequency modulation band, wherein
the antenna includes
a magnetic member, and
an antenna copper plate arranged on a periphery of the magnetic member so that the antenna copper plate wraps nearly one around the magnetic member.

26. A transmitter/receiver comprising:
a receiving unit that includes a demodulating unit that receives a reception radio wave in a frequency modulation multiplex telecasting and that demodulates the reception radio wave to output;
a transmitting unit that includes a modulating unit that modulates a transmissive radio wave in the frequency modulation band to output;
a display unit that displays text information output by the demodulating unit; and
an antenna for receiving and transmitting a frequency in the frequency modulation band; wherein
the antenna includes
a magnetic member, and
an antenna copper plate arranged on a periphery of the magnetic member so that the antenna copper plate wraps nearly one around the magnetic member.
